# EUROPÄISCHE PATENTSCHRIFT

(11) **EP 1 881 915 B1**
(45) Veröffentlichungstag und Bekanntmachung des Hinweises auf die Patenterteilung: **10.03.2010**
(21) Anmeldenummer: 06724808.8
(22) Anmeldetag: 12.05.2006
(51) Int. Cl.: B60R 21/04

(54) **VORRICHTUNG ZUR ERHÖHUNG DES INSASSENSCHUTZES IN EINEM FAHRZEUG BEI EINEM SEITENAUFPRALL**
DEVICE FOR INCREASING OCCUPANT PROTECTION IN A VEHICLE DURING A SIDE IMPACT
DISPOSITIF DESTINE A AUGMENTER LE NIVEAU DE PROTECTION DES OCCUPANTS D'UN VEHICULE EN CAS DE CHOC LATERAL

(30) Priorität: 19.05.2005 DE 102005023073; 30.08.2005 DE 102005041079
(43) Veröffentlichungstag der Anmeldung: 30.01.2008
(73) Patentinhaber: Fraunhofer-Gesellschaft zur Förderung der angewandten Forschung e.V., 80686 München (DE); Faurecia Innenraumsysteme GmbH, 76767 Hagenbach (DE)
(72) Erfinder: MELZ, Tobias, 64285 Darmstadt (DE); SEIPEL, Björn, 61197 Florstadt (DE); ZIMMERMANN, Eric, 34125 Kassel (DE); SIELHORST, Bernhard, 36205 Sontra (DE)
(74) Vertreter: Rösler, Uwe
(86) Internationale Anmeldenummer: PCT/EP2006/004501
(87) Internationale Veröffentlichungsnummer: WO 2006/122725

(56) Entgegenhaltungen:
- WO-A-2005/025945
- DE-C1- 10 043 290
- US-A1- 2004 061 321

## Beschreibung

### Technisches Gebiet

Die Erfindung bezieht sich auf eine Vorrichtung zur Erhöhung des Insassenschutzes in einem Kraftfahrzeug bei einem Seitenaufprall, bei dem ein Energieeintrag seitlich auf einen Türbereich des Kraftfahrzeuges einwirkt, wobei sich ein Fahrzeugsitz auf der dem Energieeintrag abgewandten Seite der Kraftfahrzeugtür befindet, die eine dem Fahrzeugsitz zugewandte Türinnenverkleidung vorsieht.

### Stand der Technik

Kraftfahrzeugunfälle, bei denen ein kollisionsbedingter, unkontrollierter Energieeintrag im Wege eines Seitenaufpralls auf eine Kraftfahrzeugtür einwirkt, führen zumeist zu erheblichen Verletzungen der Kraftfahrzeuginsassen, insbesondere bei jenen Personen, die sich der dem Seitenaufprall ausgesetzten Kraftfahrzeugtür am nächsten befinden. Ursache hierfür ist der nur kleine zur Verfügung stehende Deformationsweg die der die Crash-Energie auffangende Kraftfahrzeugtür zur Verfügung steht sowie das verhältnismäßig nur geringe Crash-Energie-Absorptionsvermögen der Seitenstruktur eines Kraftfahrzeuges.

Um das Verletzungsrisiko bei Seitenaufprallszenarien zu reduzieren sind zahlreiche Vorschläge bekannt, die Steifigkeit der Kraftfahrzeugtüren in Fahrzeugquerrichtung mit Hilfe geeigneter die Kraftfahrzeugtür stabilisierender Seitenaufprallträgersysteme zu erhöhen, wie sie der DE AS 22 15 674, DE 41 25 299 C2 sowie der DE 198 28 444 A1 zu entnehmen sind.

Stellvertretend für derartige Systeme mit Seitenaufpralllschutz sei auf die DE 103 41 329 A1 verwiesen, in der ein Seitenaufprallschutzsystem beschrieben ist, dessen die Kraftfahrzeugtür durchsetzender Seitenaufprallträger durch kontrollierte Zufuhr einer von dem durch die Kollision herrührenden Energieeintrag unabhängigen Energieform derart aktivierbar ist, dass der Seitenaufprallträger mit stabilen, die Kraftfahrzeugtür umgebenden Karosseriebereichen eine abstützende Wirkverbindung erzielt. Die Verwendung von einem Wandlerwerkstoff, der zur Aktivierung des Seitenaufprallträgers eingesetzt wird, ermöglicht es, die Funktionsweise des Seitenaufprallträgers reversibel auszugestalten und insbesondere zu bestimmt ausgewählten Zeitpunkten zu aktivieren.

Die bisher bekannten Seitenaufprallschutzsysteme vermögen zwar mit fortschreitender Entwicklung den auf eine Kraftfahrzeugtür gerichteten Crash-Energie-Eintrag besser zu absorbieren und in steifere Karosseriebereiche abzuleiten, gleichwohl vermögen sie nicht die crashbedingte unkontrollierte Eigenbewegungen einer auf einem Kraftfahrzeugsitz sitzenden Person zum Schutze der Person vor Verletzungen zu beeinflussen. Hierzu werden vielmehr Airbag-Systeme eingesetzt, die sich nach erfolgter Kollision explosionsartig in den Kraftfahrzeuginnenraum entfalten und als Aufprallkissen für die Person dienen. Insbesondere in und längs der Türinnenverkleidung einer Kraftfahrzeugtür integrierte Airbag-Systeme bieten einen federnden Abstandsschutz zwischen der Türinnenverkleidung und der sich auf dem Fahrzeugsitz befindlichen Person. Airbag-Systeme sind jedoch in an sich bekannter Weise lediglich ein einziges Mal einsetzbar und verfügen nur im Zustand ihrer maximalen Befüllung über abfedemde Schutzeigenschaften.

Einen Schritt weiter in Hinblick auf eine Reduzierung des Verletzungsrisikos von Fahrzeuginsassen bei Seitenaufprallunfällen geht ein Vorschlag, der in der nach veröffentlichten DE 103 51 752 A1 beschrieben ist, deren Offenlegungstag zeitlich nach (!) dem in Anspruch genommenen Zeitrang der Hinterlegung dieser Erfindung liegt. In diesem Fall sieht die Sicherheitseinrichtung mindestens ein Polsterelement vor, das am Fahrzeug seitlich benachbart zu einer Insassenposition angeordnet und durch eine Betätigungsvorrichtung aus einer Ruhelage in Richtung auf die Insassenposition in eine ausgefahrene Lage bewegbar ist, wobei die Betätigungsvorrichtung durch einen fahrzeugeigenen Antrieb antreibbar ist. Die Auslenkung der Polsterelemente erfolgt elektromotorisch, mittels eines Federspeichers oder durch ein pyrotechnisches Element.

Weiterhin ist eine Fahrzeuginsassenschutzvorrichtung gemäß des Oberbegriffs des Anspruchs 1 aus der DE. 100 43 290 C1 bekannt.

### Darstellung der Erfindung

Der Erfindung liegt die Aufgabe zugrunde, eine Vorrichtung zur Erhöhung des Insassenschutzes in einem Kraftfahrzeug bei einem Seitenaufprall, bei dem ein Energieeintrag seitlich auf einem Türbereich des Kraftfahrzeuges einwirkt, wobei sich ein Fahrzeugsitz auf der dem Energieeintrag abgewandten Seite der Kraftfahrzeugtür befindet, die eine dem Kraftfahrzeugsitz zugewandte Türinnenverkleidung vorsieht, derart weiterzubilden, dass der Schutz für eine auf dem Fahrzeugsitz befindlichen Person vor unkontrollierten Aufschlägen, insbesondere an der dem kollisionsbedingten Energieeintrag ausgesetzten Kraftfahrzeugtür verbessert werden soll. Darüber hinaus soll die Vorrichtung möglichst reversibel einsetzbar sein.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der Beschreibung unter Bezugnahme auf die Ausführungsbeispiele zu entnehmen.

Lösungsgemäß zeichnet sich die Vorrichtung zur Erhöhung des Insassenschutzes in einem Kraftfahrzeug bei einem Seitenaufprall dadurch aus, bei dem ein Energieeintrag seitlich auf einen Türbereich des Kraftfahrzeuges einwirkt, wobei sich ein Fahrzeugsitz auf der dem Energieeintrag abgewandten Seite der Kraftfahrzeugtür befindet, die eine dem Fahrzeugsitz zugewandte Türinnenverkleidung vorsieht und wenigstens ein Teilbereich der Türinnenverkleidung mittels einer mit der Kraftfahrzeugtür und dem Teilbereich verbundenen Antriebseinheit aus einem Ausgangszustand in einen in den Kraftfahrzeuginnenraum ragenden, ausgelenkten Zustand überführbar ist, dadurch aus, dass die Antriebseinheit einen durch Energiezufuhr aktivierbaren Wandlerwerkstoff aufweist.

Der lösungsgemäßen Vorrichtung liegt die Idee zugrunde, den vorhandenen Zwischenraum zwischen einer auf dem Kraftfahrzeugsitz sitzenden Person und der Türinnenverkleidung möglichst vollständig auszufüllen, so dass damit Einfluss auf das dynamische Verhalten der Person im Crashfalle genommen werden kann. So wird eine Person im Falle eines Seitenaufpralls zunächst von dem auf das Kraftfahrzeug einwirkende Kraftmoment nach Überwindung des körpereigenen Trägheitsmomentes in Richtung des kollisionsbedingten Kraftflusses beschleunigt, wodurch eine Bewegung iniziiert wird, die letztlich durch das Sicherheitsgurtsystem abrupt abgebremst wird und aufgrund der Eigenelastizität des Sicherheitssystems als auch der des Personenkörpers in eine Rückbewegung in Richtung der dem Seitenaufprallenergiefluss ausgesetzten Kraftfahrzeugtür umgewandelt wird. Hierbei erfährt die Person, insbesondere im Kopf/Nackenbereich extreme wechselnde Kraftmomente, die ein hohes Verletzungspotential beinhalten, jedoch erleidet eine Person zumeist lebensgefährliche Verletzungen beim seitlichen Aufprall an der dem Kraftfahrzeuginnenraum zugewandten Kraftfahrzeugtür, die kollisionsbedingt zu Seiten des Kraftfahrzeuginnenraumes deformiert ist bzw. wird. Die lösungsgemäße Vorrichtung ermöglicht, das lebensgefährliche Verletzungspotential der mit dem Anprall der Person an die Kraftfahrzeugtürinnenwand verbunden ist, entscheidend zu verringern, indem die vorstehend geschilderte, entgegen des kollisionsbedingten Krafteintrages gerichtete Rückbewegung möglichst unterbunden und vor allem durch den lösungsgemäßen Einsatz von Wandlerwerkstoff schonend abgebremst wird. Voraussetzung hierfür ist die aktive Minimierung des freien Zwischenraumes zwischen der Person und der Kraftfahrzeugtürinnenverkleidung mittels eines auf einem Wandlerwerkstoff beruhenden Antriebselementes.

Hierzu sieht die Türinnenverkleidung wenigstens einen Teilbereich vor, der aus der Ebene der Türinnenverkleidung rotatorisch oder translatorisch zur Abstandsminimierung zur Person ausgelenkt wird und vorzugsweise in leichte seitliche Berührung mit der Person tritt. Übt die Person durch ihr kollisionsbedingtes dynamisches Bewegungsverhalten eine Anpresskraft auf den ausgelenkten Teilbereich der Türinnenverkleidung auf, so wird der Teilbereich vorzugsweise in seine Ausgangsposition zurückgeführt, wobei die Rückführung unter Verwendung geeigneter Dämpfungselemente gedämpft bzw. abgebremst erfolgt. Als bevorzugte Dämpfungseinheiten eignen sich grundsätzlich jegliche Arten von elastischen Formkörpern, wie Schaumkissen, Elastomere etc., besonders vorteilhaft ist jedoch der Einsatz von Wandlerwerkstoffen, beispielsweise Formgedächtnislegierungen oder elektrorheologische Flüssigkeiten, um nur einige zu nennen, deren Dämpfungseigenschaften durch entsprechende Aktivierung im Wege kontrollierter elektrischer Energiezufuhr eingestellt werden können. Innerhalb derart ausgebildeter Dämpfungseinheiten findet eine Energiedissipation statt, durch die die auf die Person einwirkenden biomechanischen Belastungen entscheidend verringert werden können. So ermöglicht die lösungsgemäße Ausbildung der Dämpfungseinheit unter Verwendung eines Wandlerwerkstoffes sowohl die gezielte Auslenkung eines jeweiligen Teilbereiches der Türinnenverkleidung und dient zugleich auch als Dämpfungseinheit. Auf diese Weise können die Antriebseinheit und die Dämpfungseinheit in einer einzigen Einheit kombiniert werden, wodurch eine kleinbauende und leichtgewichtige Einheit realisierbar ist, wie sie im Automobilbau wünschenswert ist.

Eine bevorzugte Kombination des lösungsgemäßen Sicherheitssystems mit einem fahrzeugeigenen Sensorsystem, das eine unmittelbar bevorstehende und als unvermeidbar einzuschätzende Seitenaufprallsituation zu detektieren vermag, erlaubt eine rechtzeitige Aktivierung der Antriebseinheit und eine damit verbundene kontrollierte Auslenkung des wenigstens einen Teilbereiches der Türinnenverkleidung noch bevor die Kollisionsenergie auf das Kraftfahrzeug einwirkt. Hierdurch wird der vorstehend beschriebene Abstand zwischen Türinnenverkleidung und Person auf ein Minimum reduziert wird. Selbst der durch die Reaktionszeit sowie die Elastizität des Sicherheitsgurtsystems bedingte zusätzliche Abstand zur Kraftfahrzeugtür kann durch entsprechende Nachführung des auslenkbaren Teilbereiches minimiert werden. Auf diese Weise ist eine Situation geschaffen, in der die Person einerseits durch das Sicherheitsgurtsystem und andererseits durch den wenigstens einen ausgelenkten Teilbereich der Türinnenverkleidung gefasst ist.

In einer besonders bevorzugten Ausführungsform werden zwei voneinander entkoppelte Teilbereiche der Türinnenverkleidung jeweils in einen ausgelenkten Zustand überführt, von denen einer den Beckenbereich und der andere den Toraxbereich einer auf dem Kraftfahrzeugsitz befindlichen Person einseitig seitlich abzustützen vermag. Beide Teilbereiche werden mittels der ihnen zugeordneten Dämpfungseinheiten mit gleichen oder jeweils an die biomechanischen Belastungsgrenzen der entsprechenden Körperbereiche angepaßten unterschiedlichen Dämpfungskennlinien in ihre jeweiligen Ausgangszustände durch die Eigendynamik der Person zurückgeführt, so dass die Person eine weitgehend schonende Abfederung erfährt.

Selbstverständlich ist es möglich mehr als zwei Teilbereiche oder gar auch die gesamte Türinnenverkleidung in geeigneter Weise zur lösungsgemäßen Abfederung der Person zu nutzen.

Der beschriebenen Vorrichtung zur gezielten Reduzierung des lebensgefährlichen Verletzungspotenzials, das Insassen eines Kraftfahrzeuges im Falle eines Seitenaufpralls ausgesetzt sind, liegt ein Verfahrensprinzip zugrunde, dass sich dadurch auszeichnet, dass wenigstens ein Bereich eines zwischen einer auf den Kraftfahrzeugsitz sitzenden Person und der Türinnenverkleidung vorhandenen Zwischenraums durch Auslenken wenigstens eines Teilbereiches der Türinnenverkleidung in Richtung Kraftfahrzeuginnenraum minimiert wird. Ferner gilt es die Person während oder nach dem kollisionsbedingten Energieeintrag im Wege einer kollisionsbedingten Relativbeschleunigung in Richtung Türinnenverkleidung durch den wenigstens einen Teilbereich der Türinnenverkleidung dämpfend abzubremsen. In besonders vorteilhafter Weise erfolgt die Auslenkung des wenigstens einen Teilbereiches der Türinnenverkleidung in Richtung Kraftfahrzeuginnenraum zeitlich vor dem kollisionsbedingten Energieeintrag mit Hilfe an sich bekannter Pre-Crashsensoren, die am, vorzugsweise seitlich am Kraftfahrzeug angebracht sind und eine zeitlich kurz bevorstehende und als unvermeidbar anzusehende Seitenaufprallsituation detektieren. In diesem Fall wird die zur Auslenkung des wenigstens einen Teilbereiches der Türinnenverkleidung erforderliche Antriebseinheit aktiviert. Als vorteilhafte Auslenkungen erweisen sich translatorische oder rotatorische Bewegungen des wenigstens einen Teilbereiches in Richtung Kraftfahrzeuginnenraum. Der lösungsgemäße Einsatz von Wandlerwerkstoffen zu Zwecken der Auslenkung ermöglicht nicht nur eine außerordentlich schnelle Aktivierung und Auslenkung des Teilbereiches, darüber hinaus ist die Auslenkung schadlos reversibel durchführbar, d.h. sollte eine Fehlauslösung erfolgen, so führt dies nicht zum Ausfall des lösungsgemäßen Sicherheitssystems, wie es beim Airbag-System der Fall ist, bei dem nach erfolgter Aktivierung ein Komplettaustausch des Airbags erforderlich ist. Die reversible Funktionsweise des lösungsgemäßen Sicherheitssystems verzeiht demzufolge Missinterpretationen der sensoriell erfassten Annäherungssituation, so dass der Einsatz weniger zuverlässig arbeitende und zugleich kostengünstigere Sensorsysteme ermöglicht wird.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Darstellung einer typischen Seitenaufprallsituation,
- Fig. 2a, b: schematisierte Darstellung einer lösungsgemäß ausgebildeten Türinnenverkleidung, sowie
- Fig. 3a, b, c: Sequenzbilddarstellungen zur Auslenkung wenigstens eines Teilbereiches einer Türinnenverkleidung.

### Wege zur Ausführung der Erfindung, gewerbliche Verwendbarkeit

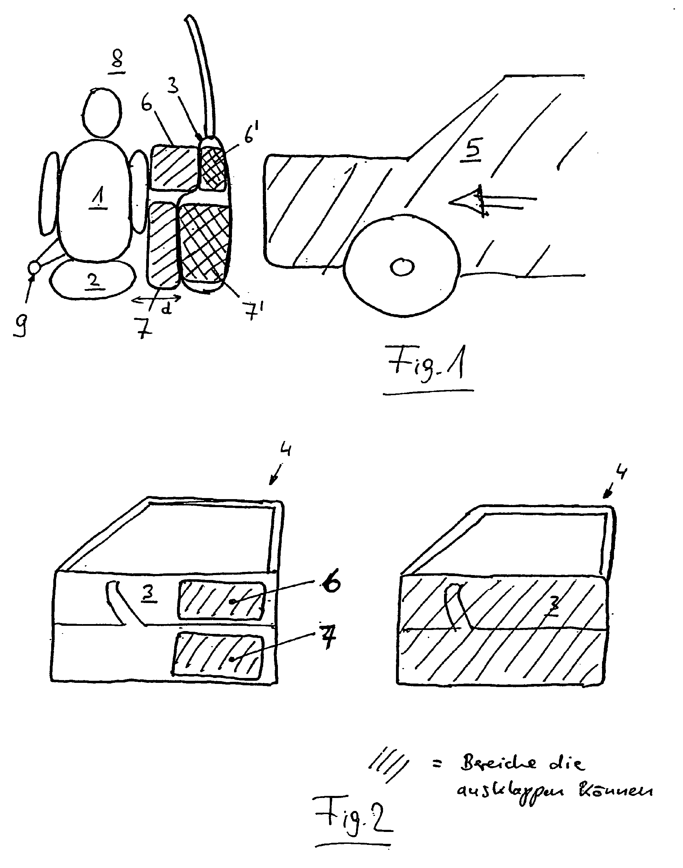

Figur 1 zeigt eine schematisierte Momentaufnahme einer zeitlich kurz bevorstehenden, als unvermeidbar anzusehenden Seitenaufprallsituation. Eine Person 1 sitzt innerhalb eines Kraftfahrzeuges auf einem Kraftfahrzeugsitz 2, die einen Abstand d zur Türinnenverkleidung 3 einer Kraftfahrzeugtür 4 aufweist. Ein nicht dargestelltes Sensorsystem erkennt die als unvermeidlich einzustufende Seitenaufprallsituation, bei der sich ein Fahrzeug 5 seitlich der Kraftfahrzeugtür 4 nähert. In diesem Fall werden Teilbereiche 6, 7 der Türinnenverkleidung 3 in Richtung des Kraftfahrzeuginnenraums 8 ausgelenkt, um den durch den Abstand d beschreibbaren Zwischenraum zwischen Person 1 und Türinnenverkleidung 3 auszufüllen und einen an die Person 1 angenäherten, ausgelenkten Zustand einzunehmen.

Kommt es zur Kollision zwischen dem Kraftfahrzeug 5 und der schematisch dargestellten Kraftfahrzeugtür 4, so wird die Person 1 zunächst in Richtung des durch das Kraftfahrzeug 5 verursachten Kraftstoß, d.h. im dargestellten Fall nach links beschleunigt und anschließend aufgrund der durch das Sicherheitsgurtsystem 9 verursachten Rückhaltekraft in Richtung der Kraftfahrzeugtür 4 rückbewegt. Dieser Rückbewegungsvorgang erfolgt jedoch gedämpft bzw. abgebremst, zumal die mit der Türinnenverkleidung 3 verbundenen Teilbereiche 6, 7 wieder in ihren Ausgangszustand 6', 7' (siehe gekreuzte Schraffur) zurückgeführt werden. Der Rückbewegungsvorgang der Teilbereiche 6, 7 erfolgt gedämpft bzw. abgebremst, nämlich unter Verwendung geeigneter Dämpfungseinheiten, die mittels Wandlerwerkstoffe oder Schaumstoffelemente o.ä. zurückgeführt werden.

In Abbildung 2a ist schematisiert die Türinnenverkleidung 3 einer Kraftfahrzeugtür 4 dargestellt mit zwei flächenhaft ausgebildeten Teilbereichen 6, 7, die aus der Oberfläche der Türinnenverkleidung 3 in einen in Richtung des Kraftfahrzeuginnenraums ausgelenkten Zustand überführbar sind. Hierbei vermag der Teilbereich 6 den Thorax- bzw. Schulterbereich einer auf einem Kraftfahrzeugsitz befindlichen Person abzufangen bzw. abzufedern, wohingegen der Teilbereich 7 den Beckenbereich einer Person zu schützen vermag. In der Ausführungsvariante gemäß Figur 2b ist die gesamte Türinnenverkleidung (siehe schraffierten Bereich) in einen in den Kraftfahrzeuginnenraum ragenden ausgelenkten Zustand überführbar.

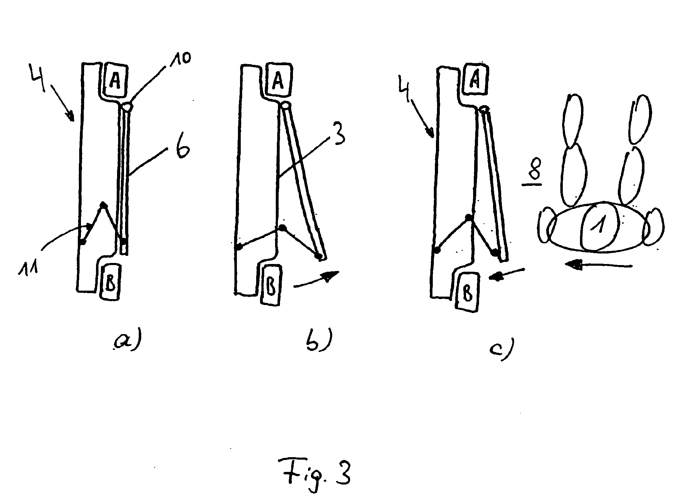

Die Auslenkung jeweils eines Teilbereiches der Türinnenverkleidung kann entweder längs einer Linearachse translatorisch oder gemäß Sequenzbilddarstellungen der Figuren 3a bis c durch Rotation um eine vertikal angeordnete Schwenkachse 10 erfolgen. Die in den Figuren 3a bis c dargestellten Sequenzbilder entsprechen schematisierte Draufsichten auf eine rechte Kraftfahrzeugtür 4, an deren Türinnenseite 3 ein in den Kraftfahrzeugtürinnenraum 8 klappbar bzw. schwenkbar gelagerter Teilbereich 6 angebracht ist. Die Kraftfahrzeugtür ist zwischen der A- und B-Säule arretiert. Der Teilbereich 6 ist mit seinem vorderen Seitenkantenbereich drehbeweglich um die Achse 10 angelenkt und mit seinen gegenüberliegenden, in den Kraftfahrzeuginnenraum 8 schwenkbaren Endbereich mit einer Gelenkkinematik 11 verbunden, die einerseits mit dem frei schwenkbaren Ende des Teilbereiches 6 und andererseits mit der Kraftfahrzeugtür 4 verbunden ist. Die Gelenkkinematik 11 dient sowohl als Antriebseinheit zur Auslenkung des Teilbereiches 6, siehe Bilddarstellung gemäß Figur 3b, als auch zur gedämpften Rückführung des ausgelenkten Teilbereiches 6 in den Ausgangszustand (siehe Figur 3c). Die als Antriebs- sowie auch Dämpfungseinheit ausgebildete Gelenkkinematik 11 ist aus einem Wandlerwerkstoff gefertigt oder weist zumindest Teilbereiche auf, die aus einem Wandierwerkstoff bestehen, beispielsweise in Form einer Formgedächtnislegierung oder einer elektrorheologischen Flüssigkeit, deren Formausdehnung durch Energiezufuhr, vorzugsweise in Form elektrischer Energie beeinflussbar ist. Selbstverständlich ist es auch möglich, andere Wandlerwerkstoffe einzusetzen, wie beispielsweise Piezokeramiken, insbesondere bleifreie Piezokeramiken, Piezopolymere, elektrostriktive Keramiken, elektrorheologische Fluide, Polymergele, magnetrheologische Fluide, sowie auch Formgedächtnispolymere. Je nach Wahl des eingesetzten Wandlerwerkstoffes sind entsprechende Aktorausbildungen zur zielführenden Auslenkung des jeweiligen Teilbereiches erforderlich.

Die wenigstens in Teilbereichen aus Wandlerwerkstoffen bestehende Gelenkkinematik 11 verfügt über ein individuell einstellbares bzw. vorgebbares Dämpfungsverhalten, das die Rückführung des ausgelenkten Teilbereiches 6 mit individueller Abbremscharakteristik ermöglicht. Selbstverständlich ist es möglich, die Gelenkkinematik 11 zusätzlich mit weiteren Dämpfungseinheiten zu kombinieren, wie beispielsweise mit Elastomeren, oder Schaumstoffkissen etc..

### Bezugszeichenliste

- 1: Person
- 2: Kraftfahrzeugsitz
- 3: Türinnenverkleidung
- 4: Kraftfahrzeugtür
- 5: Kraftfahrzeug
- 6,7: Teilbereiche
- 8: Kraftfahrzeuginnenraum
- 9: Sicherheitsgurtsystem
- 10: Schwenkachse
- 11: Gelenkkinematik

## Patentansprüche

1. Vorrichtung zur Erhöhung des Insassenschutzes in einem Kraftfahrzeug (5) bei einem Seitenaufprall, bei dem ein Energieeintrag seitlich auf einen Türbereich des Kraftfahrzeuges einwirkt, wobei sich ein Fahrzeugsitz (2) auf der dem Energieeintrag abgewandten Seite der Kraftfahrzeugtür (4) befindet, die eine dem Fahrzeugsitz zugewandte Türinnenverkleidung (3) vorsieht und wenigstens ein Teilbereich (6, 7) der Türinnenverkleidung (3) mittels einer mit der Kraftfahrzeugtür (4) und dem Teilbereich (6, 7) verbundenen Antriebseinheit aus einem Ausgangszustand in einen in den Kraftfahrzeuginnenraum ragenden, ausgelenkten Zustand überführbar ist, **dadurch gekennzeichnet, dass** die Antriebseinheit einen durch Energiezufuhr aktivierbaren Wandlerwerkstoff aufweist.

2. Vorrichtung nach Anspruch 1,
**dadurch gekennzeihnet, dass** eine Dämpfungseinheit zwischen der Kraftfahrzeugtür (4) und dem Teilbereich (6, 7) vorgesehen ist, die bei einem aus dem Kraftfahrzeuginnenraum herrührenden Krafteintrag eine gedämpfte Rückführung des Teilbereiches in Richtung des Ausgangszustandes ermöglicht.

3. Vorrichtung nach Anspruch 1 oder 2,
**dadurch gekennzeichnet, dass** am Kraftfahrzeug (5) ein Sensorsystem mit Auswerteeinheit vorgesehen ist, das einen zeitlich kurz bevorstehenden Seitenaufprall zu detektieren vermag, und
dass bei Detektion eines als unvermeidbar erscheinenden Seitenaufpralls die Antriebseinheit aktivierbar ist und den wenigstens einen Teilbereich (6, 7) in den ausgelenkten Zustand überführt zeitlich bevor der Seitenaufprall-bedingte Energieeintrag auf die Kraftfahrzeugtür (4) einwirkt.

4. Vorrichtung nach Anspruch 2 oder 3,
**dadurch gekennzeichnet, dass** die Dämpfungseinheit einen Wandlerwerkstoff aufweist.

5. Vorrichtung nach einem der Ansprüche 1 bis 4, **dadurch gekennzeichnet, dass** das Dämpfungsverhalten des Wandlerwerkstoffs durch Energiezufuhr einstellbar ist.

6. Vorrichtung nach einem der Ansprüche 2 bis 5, **dadurch gekennzeichnet, dass** die Antriebseinheit und die Dämpfungseinheit als eine Komponente auf Basis eines Wandlerwerkstoffes ausgebildet ist.

7. Vorrichtung nach einem der Ansprüche 2 bis 6, **dadurch gekennzeichnet, dass** die Dämpfungseinheit ein elastisches Element und/oder dillatier- und deflatierbares Element aufweist.

8. Vorrichtung nach einem der Ansprüche 2 bis 7,
**dadurch gekennzeichnet, dass** die Dämpfungseinheit ein geschäumtes Kissen ist.

9. Vorrichtung nach einem der Ansprüche 1 bis 8, **dadurch gekennzeichnet, dass** die Antriebseinheit in Art eines Linearantriebes ausgebildet ist, der den wenigstens einen Teilbereich (6, 7) längs einer in den Kraftfahrzeuginnenraum gerichteten Linearachse bewegt.

10. Vorrichtung nach einem der Ansprüche 1 bis 9,
**dadurch gekennzeichnet, dass** der wenigstens eine Teilbereich (6, 7) um eine vertikal orientierte Schwenkachse (10) in den Kraftfahrzeuginnenraum schwenkbar gelagert ist.

11. Vorrichtung nach einem der Ansprüche 1 bis 10,
**dadurch gekennzeichnet, dass** der wenigstens eine Teilbereich (6, 7) in Höhe des Thorax, der Schulter oder des Beckenbereiches einer auf dem Kraftfahrzeugsitz (2) sitzenden Person (1) angeordnet ist.

12. Vorrichtung nach Anspruch 10,
**dadurch gekennzeichnet, dass** mehrere auslenkbare Teilbereiche (6 ,7) der Türinnenverkleidung (3) vorgesehen sind, von denen jeweils einer in Höhe des Thorax, einer in Höhe der Schulter und/oder einer in Höhe des Beckenbereiches einer auf dem Kraftfahrzeugsitz (2) sitzenden Person (1) angeordnet ist, und
dass die einzelnen auslenkbaren Teilbereiche mit einer einheitlichen oder einer unterschiedlichen Auslenkung aktivierbar sind.

13. Vorrichtung nach einem der Ansprüche 1 bis 12,
**dadurch gekennzeichnet, dass** die auslenkbaren Teilbereiche (6, 7) jeweils Dämpfungseinheiten mit gleichen oder unterschiedlichen Dämpfungskennlinien aufweisen, die an die biomechanischen Beanspruchungsgrenzen jeweiliger Körperbereiche der Person (1) angepasst sind.

14. Vorrichtung nach einem der Ansprüche 1 bis 13,
**dadurch gekennzeichnet, dass** der Teilbereich (6, 7) im ausgelenkten Zustand, gemessen von der Oberfläche der Türinnenverkleidung (3), derart weit in den Kraftfahrzeuginnenraum hineinragt, dass ein Zwischenraum zwischen dem Kraftfahrzeuginnenraum zugewandten Teilbereich (6, 7) und einer auf dem Kraftfahrzeugsitz (2) befindlichen Person (1) minimiert ist.

15. Vorrichtung nach einem der Ansprüche 1 bis 14,
**dadurch gekennzeichnet, dass** die gedämpfte Rückführung des Teilbereiches (6, 7) durch Wahl der Dämpfung derart erfolgt, dass bei einem Anprall einer auf dem Kraftfahrzeugsitz (2) befindlichen Person (1) an den ausgelenkten Teilbereich (6, 7) die physiologischen Belastungsgrenzen der Person (1) möglichst nicht überschritten werden.

16. Vorrichtung nach einem der Ansprüche 1 bis 15,
**dadurch gekennzeichnet, dass** der Wandlerwerkstoff wenigstens aus einer der nachfolgenden Werkstoffklassen besteht: Piezo-Keramik, bleifreie Piezo-Keramik, Piezo-Polymer, elektrostriktive Keramik, elektrorheologisches Fluid, elektroaktives Polymer, Polymergel, magnetorheologisches Fluid, Formgedächtnislegierung, Formgedächtnispolymer.

## Claims

1. A device for increasing the occupant protection in a motor vehicle (5) during a side impact, during which an energy introduction acts laterally on a door area of the motor vehicle, a vehicle seat (2) being located on the side of the motor vehicle door (4) facing away from the energy introduction, which provides a door inner panel (3) facing toward the vehicle seat, and at least one subarea (6, 7) of the door inner panel (3) being transferable using a drive unit, which is connected to the motor vehicle door (4) and the subarea (6, 7), from a starting state into a deflected state protruding into the motor vehicle interior, **characterized in that** the drive unit has a converter material, which is activatable by supplying energy.

2. The device according to Claim 1,
**characterized in that** a damping unit is provided between the motor vehicle door (4) and the subarea (6, 7), which allows a damped return of the subarea in the direction of the starting state in the event of a force introduction originating from the motor vehicle interior.

3. The device according to Claim 1 or 2,
**characterized in that** a sensor system having an analysis unit is provided on the motor vehicle (5), which is capable of detecting a chronologically imminent side impact, and
upon detection of a side impact which appears unavoidable, the drive unit is activatable and transfers the at least one subarea (6, 7) into the deflected state chronologically before the energy introduction caused by the side impact acts on the motor vehicle door (4).

4. The device according to Claim 2 or 3,
**characterized in that** the damping unit has a converter material.

5. The device according to one of Claims 1 through 4,
**characterized in that** the damping behavior of the converter material is settable by energy supply.

6. The device according to one of Claims 2 through 5,
**characterized in that** the drive unit and the damping unit are implemented as one component on the basis of a converter material.

7. The device according to one of Claims 2 through 6,
**characterized in that** the damping unit has an elastic element and/or an element which can be dilated and deflated.

8. The device according to one of Claims 2 through 7,
**characterized in that** the damping unit is a foamed cushion.

9. The device according to one of Claims 1 through 8,
**characterized in that** the drive unit is implemented like a linear drive, which moves the at least one subarea (6, 7) along a linear axis directed into the motor vehicle interior.

10. The device according to one of Claims 1 through 9,
**characterized in that** the at least one subarea (6, 7) is mounted so it is pivotable around a vertically oriented pivot axis (10) in the motor vehicle interior.

11. The device according to one of Claims 1 through 10,
**characterized in that** the at least one subarea (6, 7) is situated at the height of the thorax, the shoulder, or the pelvic area of a person (1) seated on the motor vehicle seat (2).

12. The device according to Claim 10,
**characterized in that** multiple deflectable subareas (6, 7) of the door inner panel (3) are provided, of which one is situated at the height of the thorax, one at the height of the shoulder, and/or one at the height of the pelvic area of a person (1) seated on the motor vehicle seat (2), and
the individual deflectable subareas are activatable using a uniform deflection or a varying deflection.

13. The device according to one of Claims 1 through 12,
**characterized in that** the deflectable subareas (6, 7) each have damping units having identical or different damping characteristic curves, which are adapted to the biomechanical stress limits of particular body areas of the person (1).

14. The device according to one of Claims 1 through 13,
**characterized in that** the subarea (6, 7) protrudes far enough into the motor vehicle interior in the deflected state, measured from the surface of the door inner panel (3), that an intermediate space between the subarea (6, 7) facing toward the motor vehicle interior and a person (1) located on the motor vehicle seat (2) is minimized.

15. The device according to one of Claims 1 through 14,
**characterized in that** the damped return of the subarea (6, 7) is performed by selection of the damping so that in the event of an impact of a person (1) located on the motor vehicle seat (2) on the deflected subarea (6, 7), the physiological stress limits of the person (1) are not exceeded as much as possible.

16. The device according to one of Claims 1 through 15,
**characterized in that** the converter material comprises at least one of the following material classes: piezo ceramics, lead-free piezo ceramics, piezo polymers, electrostrictive ceramics, electrorheological fluids, electroactive polymers, polymer gels, magnetorheological fluids, shape-memory alloys, shape-memory polymers.

## Revendications

1. Dispositif d'amélioration de la protection des passagers dans un véhicule automobile (5) lors d'un impact latéral, dans lequel une introduction d'énergie agit latéralement sur une zone de portière du véhicule automobile, un siège de véhicule (2) se trouvant du côté détourné de l'introduction d'énergie de la portière du véhicule (4) dans lequel est prévu un habillage intérieur (2) tourné vers le siège du véhicule et au moins une zone partielle (6, 7) de l'habillage intérieur de la portière (3) pouvant être mise au moyen d'une unité motrice reliée à la portière du véhicule automobile (4) et à la zone partielle (6, 7) d'une position de départ à une position déviée dépassant dans l'habitacle du véhicule automobile, **caractérisé en ce que** l'unité motrice présente un matériau transformable activable par apport d'énergie.

2. Dispositif selon la revendication 1,
**caractérisé en ce qu'**il est prévu entre la portière du véhicule automobile (4) et la zone partielle (6, 7) une unité d'amortissement qui, lors d'une introduction d'énergie provenant de l'habitacle du véhicule automobile, permet un renvoi amorti de la zone partielle vers la position de départ.

3. Dispositif selon la revendication 1 ou 2,
**caractérisé en ce qu'**il est prévu au niveau du véhicule automobile (5) un système de capteur doté d'une unité d'exploitation et qui peut détecter une collision latérale imminente et que,
en cas de détection d'une collision latérale semblant inévitable, l'unité motrice est activable et met l'au moins une zone partielle (6, 7) dans la position déviée chronologiquement avant que l'introduction d'énergie due à la collision latérale agisse sur la portière du véhicule automobile (4).

4. Dispositif selon la revendication 2 ou 3,
**caractérisé en ce que** l'unité d'amortissement présente un matériau transformable.

5. Dispositif selon une des revendications 1 à 4,
**caractérisé en ce que** le comportement d'amortissement du matériau transformable est réglable par apport d'énergie.

6. Dispositif selon une des revendications 2 à 5,
**caractérisé en ce que** l'unité motrice et l'unité d'amortissement se présentent sous la forme d'un composant à base de matériau transformable.

7. Dispositif selon une des revendications 2 à 6,
**caractérisé en ce que** l'unité d'amortissement présente un élément élastique et/ou dilatable et dégonflable.

8. Dispositif selon une des revendications 2 à 7,
**caractérisé en ce que** l'unité d'amortissement est un coussin en mousse.

9. Dispositif selon une des revendications 1 à 8,
**caractérisé en ce que** l'unité motrice est réalisée à la manière d'une commande linéaire qui déplace l'au moins une zone partielle (6, 7) le long d'un axe linéaire dirigé vers l'intérieur de l'habitacle du véhicule automobile.

10. Dispositif selon une des revendications 1 à 9,
**caractérisé en ce que** l'au moins une zone partielle (6, 7) s'appuie en pivotement autour d'un axe de pivotement (10) dirigé vers l'intérieur de l'habitacle du véhicule automobile.

11. Dispositif selon une des revendications 1 à 10,
**caractérisé en ce que** l'au moins une zone partielle (6, 7) est disposée à hauteur du thorax, de l'épaule ou de la zone du bassin d'une personne (1) assise sur le siège du véhicule automobile (2).

12. Dispositif selon la revendication 10,
**caractérisé en ce qu'**il est prévu plusieurs zones partielles orientables (6, 7) du revêtement intérieur de la portière (3), dont respectivement une est disposée à hauteur du thorax, une à hauteur de l'épaule et/ou une à hauteur de la zone du bassin d'une personne (1) assise sur le siège du véhicule automobile (2) et que les différentes zones partielles orientables (6, 7) peuvent être activées avec une déviation uniforme ou différente.

13. Dispositif selon une des revendications 1 à 12,
**caractérisé en ce que** les zones partielles orientables (6, 7) présentent respectivement des unités d'amortissement dotées de caractéristiques d'amortissement identiques ou différentes qui sont adaptées aux limites de sollicitation biomécaniques des parties respectives du corps de la personne (1).

14. Dispositif selon une des revendications 1 à 13,
**caractérisé en ce que** la zone partielles (6, 7), en position déviée, mesurée depuis la surface du revêtement intérieur de la portière (3), dépasse assez loin dans l'habitacle du véhicule pour qu'un intervalle entre la zone partielle tournée vers l'habitacle du véhicule (6, 7) et une personne (1) assise sur le siège du véhicule automobile (2) soit minimisé.

15. Dispositif selon une des revendications 1 à 14,
**caractérisé en ce que** le renvoi amorti de la zone partielle (6, 7) par sélection de l'amortissement se fait de manière à ce que, en cas d'impact d'une personne (1) se trouvant sur le siège du véhicule automobile (2) au niveau de la zone partielle déviée (6, 7), les limites physiologiques de sollicitation de la personne (1) ne soient autant que possible pas dépassées.

16. Dispositif selon une des revendications 1 à 15,
**caractérisé en ce que** le matériau transformable est composé d'au moins une des classes de matériaux suivantes : piézocéramique, piézocéramique sans plomb, piézopolymère, céramique électrostrictive, fluide électrorhéologique, polymère électroactif, gel polymère, fluide magnétorhéologique, alliage à mémoire de forme, polymère à mémoire de forme.
